# EUROPÄISCHE PATENTSCHRIFT

(11) **EP 2 796 588 B1**
(45) Veröffentlichungstag und Bekanntmachung des Hinweises auf die Patenterteilung: **22.08.2018**
(21) Anmeldenummer: 14164355.1
(22) Anmeldetag: 11.04.2014
(51) Int. Cl.: C23C 24/08, B32B 15/01, C23C 10/26, C23C 10/60

(54) **Verfahren zur Herstellung einer Hochtemperaturschutzbeschichtung**
Method for producing a high temperature protective coating
Procédé de fabrication d'un revêtement de protection haute température

(30) Priorität: 24.04.2013 DE 102013207457
(43) Veröffentlichungstag der Anmeldung: 29.10.2014
(73) Patentinhaber: MTU Aero Engines AG, 80995 München (DE)
(72) Erfinder: Walter, Heinrich, 86316 Friedberg (DE)

(56) Entgegenhaltungen:
- EP-A1- 0 587 341
- WO-A1-2007/101465
- US-A- 4 246 323
- US-A- 4 910 092

## Beschreibung

### HINTERGRUND DER ERFINDUNG

### GEBIET DER ERFINDUNG

Die vorliegende Erfindung betrifft ein Verfahren zur Herstellung einer Hochtemperaturschutzbeschichtung für metallische Bauteile, insbesondere temperaturbelastete Bauteile von Strömungsmaschinen, wie von stationären Gasturbinen oder Flugzeugtriebwerken.

### STAND DER TECHNIK

Bei mit hohen Temperaturen belasteten Bauteilen von Strömungsmaschinen, wie beispielsweise Schaufelblättern, werden geeignete Beschichtungen vorgesehen, um den Grundwerkstoff beispielsweise gegenüber Heißgaskorrosion zu schützen. Hierbei ist es z.B. bekannt, so genannte MCrAlY - Legierungen als Beschichtungswerkstoff einzusetzen, wobei M für ein Metall wie Nickel, Kobalt oder eine Kombination aus Nickel und Kobalt steht, die bei hohen Betriebstemperaturen durch Ausbildung von langsam wachsenden Chromoxidschichten oder Aluminiumoxidschichten einen Schutz gegen weitere Korrosion ausbilden. Bei Temperaturen kleiner 850°C werden üblicherweise MCrAlY - Legierungen eingesetzt, deren Zusammensetzung so gewählt ist, dass aufgrund der entsprechend hohen Chromgehalte eine Chromoxidbildung bevorzugt wird, die insbesondere bei einem Sulfidationsangriff vorteilhaft ist. Bei Temperaturen größer 850°C wird durch eine geeignete Zusammensetzung der Beschichtung die Aluminiumoxidbildung gefördert, um einem Oxidationsangriff entgegen zu wirken.

In diesem Zusammenhang können die sogenannten MCrAlY - Schichten zusätzlich einer Alitierung unterzogen werden, um durch die zusätzliche Abscheidung von Aluminium und die dadurch bedingte Anreicherung von Aluminium in der Beschichtung die Aluminiumoxidbildung zu begünstigen. Allerdings weisen derartige Beschichtungen eine geringe Sulfidationsbeständigkeit auf.

Beispiele für MCrAlY - Beschichtungen, insbesondere auch für Bauteile von Strömungsmaschinen sind in der DE 28 42 848 A1, EP 2 096 194 A2 und der US 2007/0098913 A1 beschrieben. Allerdings sind bei den Beschichtungen im Stand der Technik teilweise die Chromanteile in Form von Chromkarbidpartikeln zulegiert, so dass der Anteil des metallischen Chroms gering ist. Darüber hinaus werden entsprechende Aufbringungsverfahren beschrieben, wie beispielsweise kinetisches Kaltgasspritzen, die nicht für alle Anwendungsfälle geeignet sind.

EP 0 587 341 A1 offenbart hochtemperaturkorrosionsbeständige MCrAlY-Beschichtungen mit Chromgehalten von bis zu 40 Masse-%.

Die US4,246,323A1 offenbart ein Verfahren zur Herstellung einer korrosionsbeständigen MCrAlY-Beschichtung mittels Plasmasprühverfahren.

Die WO 2007/101465 A1 offenbart ein Verfahren zur Beschichtung einer Schaufel, bei der auf der Außenseite eine Haftschicht auf MCrAlY-Basis aufgebracht wird.

US 4,910,092 A1 offenbart ein Verfahren zur Herstellung von Yttrium-angereicherten Aluminiden unter Verwendung von MCrAlY-Verbindungen.

Gleichwohl ist es jedoch für die Verbesserung der Sulfidationsbeständigkeit vorteilhaft, den Anteil an metallischem Chrom in einer Aluminium reichen MCrAlY - Beschichtung zu erhöhen, um durch den hohen Aluminiumanteil sowohl eine gute Oxidationsbeständigkeit zu erzielen als auch die Sulfidationsbeständigkeit zu verbessern.

### OFFENBARUNG DER ERFINDUNG

### AUFGABE DER ERFINDUNG

Es ist deshalb Aufgabe der vorliegenden Erfindung eine Hochtemperaturschutzbeschichtung für metallische Bauteile, insbesondere temperaturbelastete Bauteile von Strömungsmaschinen, sowie ein Verfahren zu Herstellung der Beschichtung bereit zu stellen, wobei die Beschichtung sowohl eine gute Sulfidationsbeständigkeit als auch eine gute Oxidationsbeständigkeit bei Erzielung oder Beibehaltung erforderlicher mechanischer Eigenschaften der Beschichtung und des beschichteten Bauteils ermöglicht und wobei das Verfahren einfach und zuverlässig durchführbar sein soll.

### TECHNISCHE LÖSUNG

Diese Aufgabe wird gelöst durch ein Verfahren mit den Merkmalen des Anspruchs 1. Vorteilhafte Ausgestaltungen sind Gegenstand der abhängigen Ansprüche.

Gemäß der Erfindung wird ein Verfahren zur Herstellung einer Hochtemperaturschutzbeschichtung für metallische Bauteile vorgeschlagen, bei welchem zunächst für die Beschichtung ein Schlicker aus einem MCrAlY - Pulver und einem Chrompulver hergestellt wird, wobei das MCrAlY - Pulver mindestens ein Metall M aufweist, das aus der Gruppe der Elemente ausgewählt werden kann, die Eisen, Kobalt und Nickel umfasst. Der Schlicker wird auf das zu beschichtende Bauteil aufgetragen und anschließend wird die durch die Schlickeraufbringung erzeugte Schicht zusätzlich alitiert, um den Aluminiumanteil zu erhöhen. Durch die Beimengung von Chrompulver in den Schlicker und die anschließende Alitierung der durch den Schlicker erzeugten Zwischenschicht kann sowohl ein hoher Aluminium- als auch Chromanteil in der fertigen Beschichtung erzeugt werden, so dass die so hergestellte Hochtemperaturschutzbeschichtung sowohl gegenüber Oxidationsangriffen als auch gegenüber Sulfidationsangriffen beständig ist. Insbesondere kann durch das erfindungsgemäße Verfahren der Chromanteil in einer entsprechenden aluminiumreichen Schutzschicht auf einfache Weise in großen Bereich beliebig variiert werden, so dass eine entsprechende Einstellung der Zusammensetzung der Beschichtung auf das konkrete Anforderungsprofil möglich ist.

Das Chrompulver und das MCrAlY - Pulver können in einem Verhältnis von Chrom zu MCrAlY von kleiner oder gleich 10, insbesondere kleiner oder gleich 5, vorzugsweise kleiner oder gleich 4, ganz besonders bevorzugt kleiner oder gleich 3 beziehungsweise kleiner oder gleich 1 oder kleiner oder gleich 0,25 gewählt werden. Das Verhältnis von Chrom zu MCrAlY bei der Pulvermischung aus Chrompulver und MCrAlY - Pulver kann somit im Bereich von 0,001 bis 10, insbesondere 0,001 bis 4 und vorzugsweise im Bereich von 0,05 bis 1 gewählt werden. Damit kann eine große Bandbreite an unterschiedlichen Zusammensetzungen und insbesondere mit unterschiedlichen Chromanteilen verwirklicht werden.

Das MCrAIY - Pulver, bei welchem das M durch mindestens ein Element aus der Gruppe, die Nickel, Kobalt und Eisen umfasst, gebildet sei kann, kann Anteile von 10 Gew.-% bis 40 Gew.-% Aluminium, 0,01 Gew.-% bis 5 Gew.-% Yttrium sowie 0,1 Gew.-% bis 1 Gew.-% Hafnium aufweisen. Insbesondere können kommerziell verfügbare MCrAlY - Pulver eingesetzt werden.

Das Chrompulver kann mit Korngrößen kleiner oder gleich 20 µm, insbesondere kleiner oder gleich 10 µm, vorzugsweise kleiner oder gleich 5 µm dem Schlicker zugegeben werden. Die Angaben zur Korngröße können sich auf die maximalen Korngrößen des Chrompulvers oder entsprechenden mittlere Korngrößen des Chrompulvers beziehen. In gleicher Weise kann das MCrAlY - Pulver mit einer maximalen Korngröße bzw. eine mittleren Korngröße von kleiner oder gleich 20 µm, insbesondere kleiner oder gleich 10 µm und vorzugsweise im Bereich von 5 µm bis 10 µm im Schlicker enthalten sein.

Der Schlicker kann neben der Pulvermischung aus Chrompulver und MCrAlY - Pulver Wasser und/oder mindestens eine flüssige, organische Verbindung, insbesondere ein Öl, vorzugsweise Siebdrucköl, umfassen.

Nach dem Aufbringen des Schlickers kann dieser zunächst getrocknet werden und zwar bei Temperaturen von Raumtemperatur bis 200°C, insbesondere bei Temperaturen zwischen 50°C bis 100°C. Die Trocknung kann dabei in Luftatmosphäre oder in Vakuum oder einer Schutzgasatmosphäre erfolgen. Die Trocknung kann zudem in mehreren aufeinander folgenden Schritten mit unterschiedlichen Trocknungsbedienungen, z.B. unterschiedlichen Temperaturen und Atmosphären, durchgeführt werden.

Vor dem weiteren Schritt der Alitierung kann die Schlickerschicht zudem einer Diffusionsglühbehandlung ausgesetzt werden, die ebenfalls im Vakuum und/oder Schutzgas durchgeführt werden kann.

Bei der Schlickeraufbringung können auch mehrere Schichten von Schlicker, beispielweise zwei oder mehr Schichten hintereinander aufgetragen werden, wobei nach jedem Auftrag eine Trocknung und/oder eine Diffusionsglühung stattfinden kann.

Vor allem ist es möglich mehrere Schichten von Schlicker mit unterschiedlicher Zusammensetzung nacheinander aufzubringen, um eine Gradientenschicht zu erzeugen, bei der die Zusammensetzung der Beschichtung über der Dicke der Schicht variiert. Insbesondere können die Schlickerschichten unterschiedliche Anteile an Chrompulver aufweisen, um einen Chromgradienten einstellen zu können.

Die Alitierung kann durch eine Gasphasenalitierung durchgeführt werden, bei welcher aluminiumhaltiges Spendermaterial, wie beispielsweise Aluminiumpulver, zusammen mit einem Aktivator oder einem Ausgangsstoff für einen Aktivator, wie beispielsweise einer Halogenverbindung, für eine bestimmte Zeit einer hohen Temperatur ausgesetzt wird, um eine Anreicherung von Aluminium in der Oberfläche des entsprechend behandelten Bauteils zu bewirken. Gleichzeitig kann eine reduzierende Atmosphäre, beispielsweise aus einem Gemisch aus einem Schutzgas bzw. Inertgas, wie Argon, und Wasserstoff in der entsprechenden Reaktionskammer vorgesehen werden.

Eine entsprechende Beschichtung kann insbesondere auf einem Bauteil vorgesehen werden, welches aus einer Superlegierung gebildet ist, deren Hauptlegierungsbestandteil dem metallischen Anteil M des MCrAlY - Pulvers, das zur Beschichtung eingesetzt wird, entspricht. Beispielsweise kann es sich um eine Eisen -, Kobalt - oder Nickel - Basislegierung handeln, wobei die Beschichtung aus einem FeCrAlY -, CoCrAlY - oder NiCrAlY - Pulver oder NiCoCrAlY - Pulver hergestellt wird. Unter Superlegierungen werden Werkstoffe verstanden, deren Einsatztemperaturen höher liegen als die von Stählen, da sie durch entsprechenden Ausscheidungshärtung eine hohe Festigkeit bei hohen Temperaturen aufweisen.

### AUSFÜHRUNGSBEISPIEL

Weitere Vorteile, Kennzeichen und Merkmale der vorliegenden Erfindung werden bei der nachfolgenden detaillierten Beschreibung eines Ausführungsbeispiels deutlich, wobei die Erfindung nicht auf dieses Ausführungsbeispiel beschränkt ist.

Ein Bauteil aus der Legierung PW 1484, welche eine Zusammensetzung von 3 Gew.-% bis 12% Gew.-% Chrom, 0 Gew.-% bis 3 Gew.-% Molybdän, 3 Gew.-% bis 10% Wolfram, 0 Gew.-% bis 5 Gew.-% Rhenium, 6 Gew.-% bis 12 Gew.-% Tantal, 4 Gew.-% bis 7 Gew.-% Aluminium, 0 Gew.-% bis 15 Gew.-% Kobalt sowie weiteren unvermeidbare Verunreinigungen und geringfügigen Legierungsbestandteile sowie dem Rest Nickel aufweist, wurde mit einem Schlicker beschichtet, der aus einer Mischung von MCrAlY - Pulver aus NiCr30Co10Al4Si1Y1Hf0,5 und verschiedenen Anteilen von Chrompulver hergestellt worden ist. Die Anteile an Chrompulver wurde so variiert, dass die Mischung Chrompulver mit 20% Gew.-%, 40 Gew.-% und 60 Gew.-% enthielt.

100 Gewichtsteile der Pulvermischung wurden mit 15 Gewichtsteilen eines Siebdrucköls und 10 Gewichtsteilen Wasser zu einer Schlickermischung verarbeitet.

Das Siebdrucköl kann beispielsweise durch Äthylcellulose, Butyllaktat und Polyäthylenglykol oder durch Nitrocellulose, Diacetonalkohol, 2 - Äthylhexylacetat und Zirkogel (gefälltes Zirkoniumoxidhydrat) gebildet sein.

Der Schlicker wurde in einem Rollmischer für mehr als 24 gemischt und durch Spritzen auf das zu beschichtende Bauteil aufgetragen.

Nach der Auftragung wurde der Schlicker bei 50°C in Vakuum und anschließend bei 100°C an Luft bis zu einer halben Stunde getrocknet. Das Bauteil erhielt zwei Schichten an aufgetragenem Schlicker mit einer jeweiligen Trocknung nach jeder Aufbringung.

Anschließend wurde das Bauteil einer Gasphasenalitierung ausgesetzt, bei der das aluminiumhaltige Spendermaterial mittels des Aktivators AlF₃ auf dem zu beschichtende Bauteil abgeschieden wurde. Die Alitierung wurde bei einer Temperatur von ca. 1100°C für 6 Stunden in einer Argon - Wasserstoff - Atmosphäre durchgeführt. Für die mit verschiedenen Chrompulveranteilen beschichteten Bauteile ergaben sich nach Beendigung des Alitierprozesses im Bereich der äußeren Schicht, dass heißt bis zu einer Schichttiefe von 55 µm, folgende Gewichtsanteile:

| Chrompulveranteil in der Pulvermischung | Aluminiumanteil in der Schicht | Chromanteil in der Schicht | Nickelanteil in der Schicht |
|---|---|---|---|
| 0% Gew.-% | 30% Gew.-% | 16% Gew.-% | 44% Gew.-% |
| 20% Gew.-% | 29% Gew.-% | 22% Gew.-% | 40% Gew.-% |
| 40% Gew.-% | 29% Gew.-% | 32% Gew.-% | 33% Gew.-% |
| 60% Gew.-% | 27% Gew.-% | 39% Gew.-% | 28% Gew.-% |

Die Ergebnisse zeigen, dass mit dem erfindungsgemäßen Verfahren der Chromanteil in der Beschichtung bei gleichbleibend hohem Aluminiumanteil in einem großen Bereich variiert werden kann.

Obwohl die vorliegenden Erfindung anhand des Ausführungsbeispiele detailliert beschrieben worden ist, ist es für den Fachmann selbstverständlich, dass die Erfindung nicht auf dieses Ausführungsbeispiel beschränkt ist, sondern dass vielmehr Abwandlungen in der Weise möglich sind, dass einzelne Merkmale weggelassen oder andersartige Kombinationen der Merkmale verwirklicht werden, solange der Schutzbereich der beigefügten Ansprüche nicht verlassen wird.

## Patentansprüche

1. Verfahren zur Herstellung einer Hochtemperaturschutzbeschichtung für metallische Bauteile, insbesondere temperaturbelastete Bauteile von Strömungsmaschinen, bei welchem
ein Schlicker aus einem MCrAlY - Pulver, bei dem M mindestens ein Metall ist, und aus einem Cr - Pulver hergestellt wird, wobei
der Schlicker auf dem zu beschichtenden Bauteil aufgetragen wird und
das mit dem Schlicker versehene Bauteil alitiert wird.

2. Verfahren nach Anspruch 1,
**dadurch gekennzeichnet, dass**
das Cr - Pulver und das MCrAlY - Pulver in einem Verhältnis von Cr zu MCrAlY von kleiner oder gleich 10, insbesondere kleiner oder gleich 5, vorzugsweise kleiner oder gleich 4 gewählt werden.

3. Verfahren nach Anspruch 1 oder 2,
**dadurch gekennzeichnet, dass**
das Cr - Pulver und das MCrAlY - Pulver in einem Verhältnis von Cr zu MCrAlY von kleiner oder gleich 3, insbesondere kleiner oder gleich 1, vorzugsweise kleiner oder gleich 0,25 gewählt werden.

4. Verfahren nach einem der vorhergehenden Ansprüche,
**dadurch gekennzeichnet, dass**
das Cr - Pulver und das MCrAlY - Pulver in einem Verhältnis von Cr zu MCrAlY im Bereich von 0,001 bis 10, insbesondere 0,01 bis 4, vorzugsweise im Bereich von 0,05 bis 1 gewählt werden.

5. Verfahren nach einem der vorhergehenden Ansprüche,
**dadurch gekennzeichnet, dass**
das Cr - Pulver mit einer Korngröße kleiner oder gleich 20 µm, insbesondere kleiner oder gleich 10 µm, vorzugsweise kleiner oder gleich 5 µm gewählt wird.

6. Verfahren nach einem der vorhergehenden Ansprüche,
**dadurch gekennzeichnet, dass**
das Cr - Pulver mit einer mittleren Korngröße kleiner oder gleich 20 µm, insbesondere kleiner oder gleich 10 µm, vorzugsweise kleiner oder gleich 5 µm gewählt wird.

7. Verfahren nach einem der vorhergehenden Ansprüche,
**dadurch gekennzeichnet, dass**
das MCrAIY - Pulver mit einer Korngröße kleiner oder gleich 20 µm, insbesondere kleiner oder gleich 10 µm gewählt wird.

8. Verfahren nach einem der vorhergehenden Ansprüche,
**dadurch gekennzeichnet, dass**
das MCrAIY - Pulver mit einer mittleren Korngröße kleiner oder gleich 20 µm, insbesondere kleiner oder gleich 10 µm, vorzugsweise im Bereich von 5 µm bis 10 µm gewählt wird.

9. Verfahren nach einem der vorhergehenden Ansprüche,
**dadurch gekennzeichnet, dass**
das Metall M des MCrAlY - Pulvers aus mindestens einem der Elemente der Gruppe gewählt wird, die Fe, Co und Ni umfasst.

10. Verfahren nach einem der vorhergehenden Ansprüche,
**dadurch gekennzeichnet, dass**
der Schlicker Wasser und/oder mindestens eine flüssige organische Verbindung, insbesondere Öl, vorzugsweise Siebdrucköl umfasst.

11. Verfahren nach einem der vorhergehenden Ansprüche,
**dadurch gekennzeichnet, dass**
mindestens zwei, vorzugsweise mehrere Schichten von Schlicker hintereinander aufgetragen werden, wobei insbesondere nach jedem Auftrag eine Trocknung in Vakuum und/oder Umgebungsatmosphäre und/oder eine Diffusionsglühung durchgeführt wird.

12. Verfahren nach einem der vorhergehenden Ansprüche,
**dadurch gekennzeichnet, dass**
mindestens zwei, vorzugsweise mehrere Schichten von Schlicker mit unterschiedlicher Zusammensetzung, insbesondere unterschiedlichem Anteil an Cr - Pulver aufgetragen werden.

13. Verfahren nach einem der vorhergehenden Ansprüche,
**dadurch gekennzeichnet, dass**
die Alitierung als eine Gasphasenalitierung durchgeführt wird.

## Claims

1. Method for producing a high temperature protective coating for metal components, in particular thermally stressed components of turbomachines, in which method a dross is produced from a MCrAlY powder, in which M is at least one metal, and from a Cr powder, wherein the dross is applied to the component to be coated and the component provided with the dross is aluminized.

2. Method according to claim 1, **characterized in that** the Cr powder and the MCrAlY powder are selected so as to be in a ratio of Cr to MCrAlY of less than or equal to 10, in particular less than or equal to 5, preferably less than or equal to 4.

3. Method according to either claim 1 or claim 2, **characterized in that** the Cr powder and the MCrAlY powder are selected so as to be in a ratio of Cr to MCrAlY of less than or equal to 3, in particular less than or equal to 1, preferably less than or equal to 0.25.

4. Method according to any of the preceding claims, **characterized in that** the Cr powder and the MCrAlY powder are selected so as to be in a ratio of Cr to MCrAlY in the range of from 0.001 to 10, in particular 0.01 to 4, preferably in the range of from 0.05 to 1.

5. Method according to any of the preceding claims, **characterized in that** the Cr powder is selected so as to have a particle size of less than or equal to 20 µm, in particular less than or equal to 10 µm, preferably less than or equal to 5 µm.

6. Method according to any of the preceding claims, **characterized in that** the Cr powder is selected so as to have an average particle size of less than or equal to 20 µm, in particular less than or equal to 10 µm, preferably less than or equal to 5 µm.

7. Method according to any of the preceding claims, **characterized in that** the MCrAlY powder is selected so as to have a particle size of less than or equal to 20 µm, in particular less than or equal to 10 µm.

8. Method according to any of the preceding claims, **characterized in that** the MCrAlY powder is selected so as to have an average particle size of less than or equal to 20 µm, in particular less than or equal to 10 µm, preferably in the range of from 5 µm to 10 µm.

9. Method according to any of the preceding claims, **characterized in that** the metal M of the MCrAlY powder is selected from at least one of the elements of the group comprising Fe, Co and Ni.

10. Method according to any of the preceding claims, **characterized in that** the dross comprises water and/or at least one liquid organic compound, in particular oil, preferably screen printing oil.

11. Method according to any of the preceding claims, **characterized in that** at least two, preferably a plurality of layers of dross are applied one after the other, in particular drying in a vacuum and/or in the ambient atmosphere and/or diffusion annealing being carried out after each application.

12. Method according to any of the preceding claims, **characterized in that** at least two, preferably a plurality of layers of dross having a varying composition, in particular a varying proportion of Cr powder, are applied.

13. Method according to any of the preceding claims, **characterized in that** the aluminization is carried out as a gas-phase aluminization.

## Revendications

1. Procédé de fabrication d'un revêtement de protection contre des hautes températures destiné à des pièces métalliques, en particulier des pièces, soumises à la température, de turbomachines, dans lequel
une suspension est produite à partir d'une poudre de MCr/AlY, dans laquelle M est au moins un métal, et d'une poudre de Cr,
la suspension étant appliquée sur la pièce à revêtir et la pièce pourvue de la suspension étant calorisée.

2. Procédé selon la revendication 1,
**caractérisé en ce que**
la poudre de Cr et la poudre de MCr/AlY sont sélectionnées dans un rapport du Cr au MCr/AIY inférieur ou égal à 10, en particulier inférieur ou égal à 5, de préférence inférieur ou égal à 4.

3. Procédé selon la revendication 1 ou 2,
**caractérisé en ce que**
la poudre de Cr et la poudre de MCr/AlY sont sélectionnées dans un rapport du Cr au MCr/AlY inférieur ou égal à 3, en particulier inférieur ou égal à 1, de préférence inférieur ou égal à 0,25.

4. Procédé selon une des revendications précédentes,
**caractérisé en ce que**
la poudre de Cr et la poudre de MCr/AlY sont sélectionnées dans un rapport du Cr au MCr/AlY dans la gamme allant de 0,001 à 10, en particulier de 0,01 à 4, de préférence dans la gamme allant de 0,05 à 1.

5. Procédé selon une des revendications précédentes,
**caractérisé en ce que**
la poudre de Cr est sélectionnée avec une granulométrie inférieure ou égale à 20 µm, en particulier inférieure ou égale à 10 µm, de préférence inférieure ou égale à 5 µm.

6. Procédé selon une des revendications précédentes,
**caractérisé en ce que**
la poudre de Cr est sélectionnée avec une granulométrie moyenne inférieure ou égale à 20 µm, en particulier inférieure ou égale à 10 µm, de préférence inférieure ou égale à 5 µm.

7. Procédé selon une des revendications précédentes,
**caractérisé en ce que**
la poudre de MCr/AlY est sélectionnée avec une granulométrie moyenne inférieure ou égale à 20 µm, en particulier inférieure ou égal à 10 µm.

8. Procédé selon une des revendications précédentes,
**caractérisé en ce que**
la poudre de MCr/AlY est sélectionnée avec une granulométrie moyenne inférieure ou égale à 20 µm, en particulier inférieure ou égale à 10 µm, de préférence inférieure ou égale à 5 µm à 10 µm.

9. Procédé selon une des revendications précédentes,
**caractérisé en ce que**
le métal M de la poudre de MCr/AlY est sélectionné parmi au moins un des éléments du groupe qui comprend le Fe, le Co et le Ni.

10. Procédé selon une des revendications précédentes,
**caractérisé en ce que**
la suspension contient de l'eau et/ou au moins un composé organique liquide, en particulier de l'huile, de préférence de l'huile de sérigraphie.

11. Procédé selon une des revendications précédentes,
**caractérisé en ce que**
au moins deux, de préférence plusieurs, couches de suspension sont appliquées successivement, un séchage sous vide et/ou atmosphère ambiante et/ou un recuit à diffusion étant réalisé en particulier après chaque application.

12. Procédé selon une des revendications précédentes,
**caractérisé en ce que**
au moins deux, de préférence plusieurs, couches de suspension ayant des compositions différentes, contenant en particulier des pourcentages différents de poudre de Cr, sont appliquées.

13. Procédé selon une des revendications précédentes,
**caractérisé en ce que**
la calorisation est effectuée sous la forme d'une calorisation à phase gazeuse.
